Europäisches Patentamt

(19) European Patent Office

Office européen des brevets

(11) Publication number: **0 291 469 B1**

(12) **EUROPEAN PATENT SPECIFICATION**

(45) Date of publication of patent specification :
04.12.91 Bulletin 91/49

(51) Int. Cl.$^5$: **F16F 9/02, F16F 9/36**

(21) Application number: **88830164.5**

(22) Date of filing : **21.04.88**

(54) **Gas spring with variable thrust.**

(30) Priority: **11.05.87 IT 6740387**

(43) Date of publication of application :
**17.11.88 Bulletin 88/46**

(45) Publication of the grant of the patent :
**04.12.91 Bulletin 91/49**

(84) Designated Contracting States :
**AT BE CH DE ES FR GB GR LI NL SE**

(56) References cited :
CH-A- 310 586
DE-A- 2 403 509
DE-A- 2 530 097
DE-A- 3 442 140
FR-A- 2 449 237
US-A- 4 026 562

(73) Proprietor : **BOGE ITALIA S.P.A.**
**Via Nazionale, 209**
**I-10069 Villar Perosa Torino (IT)**

(72) Inventor : **Antoniani, Mario**
**Via Manzoni 5 Collegno**
**I-10093 Torino (IT)**

(74) Representative : **Buzzi, Franco et al**
**c/o Jacobacci-Casetta & Perani S.p.A. Via**
**Alfieri, 17**
**I-10121 Torino (IT)**

EP 0 291 469 B1

Jouve, 18, rue Saint-Denis, 75001 PARIS

## Description

The present invention relates in general to telescopic gas springs of the type including a cylinder defining a chamber containing a pressurised gas and a piston with leakage passages for the gas, slidable in the chamber of the cylinder and carrying a rod that projects from the cylinder through a guide bush adjacent to an annular sealing washer which hermetically defines the chamber and is in sealing sliding contact with the surface of the rod.

Gas springs of this type are normally used for raising the rear hatches of motor vehicles and are known for instance from the FR-A-2449237.

It is well known that these gas springs exert a thrust on the rod, and hence in this case on the hatch connected to it, which differs between the completely open position (corresponding to the completely extended position of the rod from the cylinder) and the completely closed position (corresponding to the condition in which the rod is completely retracted within the cylinder). These different thrust values are, amongst other things, variable proportionally with variations in temperature. In particularly critical conditions, for example, in the case of high-temperature environments, movement of the centre of gravity of the hatch during its closing movement or the necessity for high loads in the completely open position, the resultant thrust during the closing movement may be so high as to result in buckling of the hatch. This disadvantage is noticeably accentuated whenever the hatch has a single gas spring located on one side instead of two springs located symmetrically on opposite sides of the hatch, according to the current trend in the construction of motor vehicles.

The object of the present invention is to avoid this disadvantage and to provide a gas spring of the type defined above which has a variable stiffness and, in particular, is shaped so that the thrust generated in correspondence with the critical portions of the stroke of the rod (for example, in the final part of its stroke into the cylinder) is reduced relative to that corresponding to the rest of the stroke.

In order to achieve this object, the invention provides a telescopic gas srping of the type defined at the beginning, characterised in that the rod has a portion of reduced section for entering the chamber in substantially the final part of its retraction stroke relative to the cylinder, and in that the sealing washer has a sealing lip which is resiliently contractible in a radial direction to stay in sealing contact even against the reduced-section portion of the rod.

By virtue of this solution, the gas spring according to the invention behaves in a conventional manner for the entire stroke of the rod relative to the cylinder except in the final part of the retraction, in which the reaction of the spring, that is, the thrust tending to oppose the full retraction of the rod, is reduced in proportion to the difference between the normal section of the rod and the reduced section. In the application of the gas spring to a rear hatch for motor vehicles, this enables the force needed to complete the closure of the hatch itself to be reduced even in the critical condition specified at the beginning, avoiding a risk of damage to the hatch itself.

The reduced-section portion of the rod is conveniently connected to the portion of the rod facing the piston by means of a connecting portion with a conical surface.

In order to ensure a constant and effective sealing contact against the surface of the rod, the sealing lip has an annular form and is clamped radially against the rod by its own elasticity or alternatively under the action of an annular clamping spring.

Further characteristics of the invention will become apparent during the course of the detailed description which follows, with reference to the appended drawings provided purely by way of non-limiting example, in which :

Figure 1 is a schematic side elevational view of a motor vehicle provided with a rear hatch with which a gas spring according to the invention is associated,

Figure 2 is an axial section of the gas spring on an enlarged scale, in the position of maximum extension, and

Figure 3 is a view similar to Figure 2 showing the gas spring in the contracted condition of minimum length.

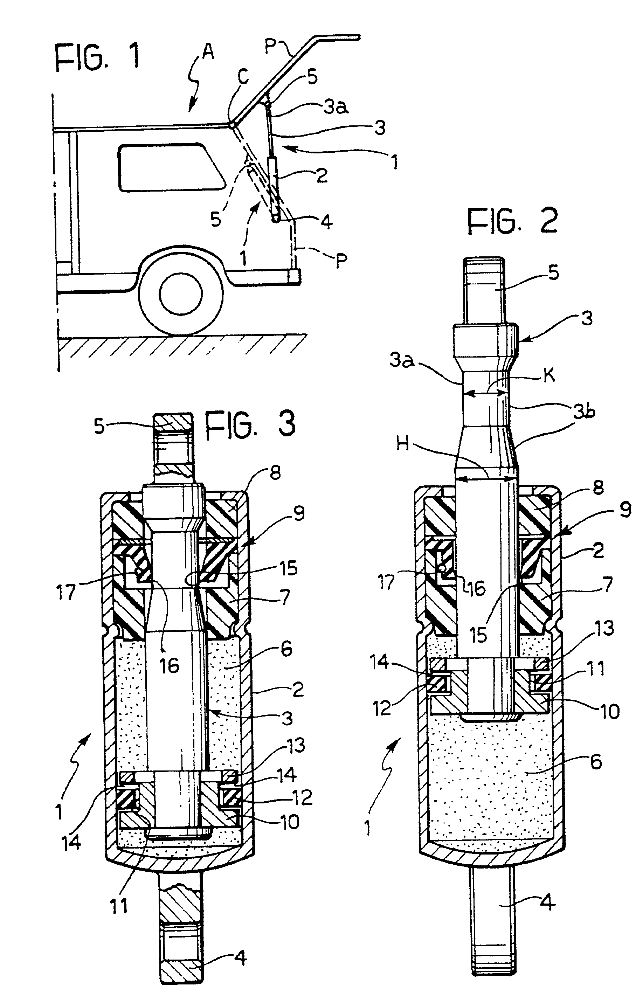

With reference initially to Figure 1, the rear part of a motor vehicle is schematically indicated A and is provided with a pivoted hatch P articulated about an upper hinge C. The hatch P has an associated telescopic gas spring 1 the function of which is to facilitate the raising of the hatch P during its opening and to act as a support in the completely open condition thereof, as well as to allow braked lowering to its closed position.

The gas spring 1 is constituted essentially by a cylinder 2 and a rod 3 articulated respectively at 4 to the structure of the vehicle A and at 5 to the hatch P. The condition illustrated in continuous outline in Figure 1 corresponds to the completely extended condition of the spring 1 (shown in Figure 2) in which the hatch P is completely open, while the condition illustrated in broken outline in Figure 1 corresponds to the contracted condition of the spring 1 (shown in Figure 3) in which the hatch P is completely closed.

With reference in greater detail to Figures 2 and 3, the cylinder 2 defines at its base end a pressure chamber 6 whose upper part is defined by a guide sleeve 7 and a guide bush 8 which are traversed in an axially slidable manner by the rod 3 and between which is clamped a sealing washer 9. This washer 9, which will be described in more detail below, isolates the pressure chamber 6, which is filled with a pressurised gas in known manner, hermetically from the exterior.

At its inner end, the rod 3 carries a piston member 10 in which is formed an annular recess 11 housing a resilient ring 12 which reacts as a brake against the inner wall of the cylinder 2. The recess 11 is defined at its end opposite the piston 10 by a disc 13 fixed to the rod 3 and defining, together with the ring 12 and the piston 10, passages, generally indicated 14, for the leakage of pressurised gas from one part of the chamber 6 to the other.

The rod 3 has a circular section with a constant diameter H, except in the zone adjacent its outer end. In fact, in this zone the rod 3 has a portion 3a which is also of circular section but has a diameter K less than the diameter H. This portion 3a of reduced section is connected to the remaining portion of the rod 3 facing the piston 10 through a connecting portion 3b with a conical surface.

The sealing washer 9 has a specific conformation adapted to ensure a constant sliding, sealing contact with the surface of the rod 3 during movements thereof with respect to the cylinder 2, both in correspondence with the portion with the diameter H and in correspondence with that with the smaller diameter K. This configuration may, for example, be that shown in the right-hand part of Figures 2 and 3 or in the left-hand part of these Figures. In the first case, the washer 9 has an annular sealing lip 15 clamped radially against the surface of the rod 3 as a result of the intrinsic elasticity of the its constituent material, and this enables it to contract and expand radially relative to the diameters K and H of the rod 3.

In the second case, the annular lip of the washer 9, indicated 16, is clamped radially against the surface of the rod 3 by means of an annular spring 17 which, as in the previous solution, achieves the clamping onto the diameters K and H respectively.

In operation, the behaviour of the gas spring 1 during extension of the rod 3 from the cylinder 2 (raising of the hatch P) and during retraction of this rod 3 into the cylinder 2 (lowering of the hatch P) is entirely similar to that of the conventional gas springs as long as the reduced-section portion 3a remains outside the pressure chamber 6. During the final phase of the retraction of the rod 3 into the cylinder 2, when the portion 3a passes the sealing lip 15 or 16 of the sealing washer 9 which is clamped progressively against the surface of the rod 3 along the connecting portion 3b, the thrust of the pressurised gas tending to oppose the lowering of the hatch P is reduced proportionally to the difference between the diameters H and K. This enables the force needed to complete the closure of the hatch P to be reduced without the risk of buckling or damage to the latter, and also ensures a smaller load on the hinges C for the whole time in which the hatch P remains in the closed position.

Naturally, the constructional details and forms of embodiment may be varied widely with respect to those described and illustrated, without thereby departing from the scope of the invention. Thus, for example, the axial position of the reduced-diameter section 3a could be varied in dependence on the applicational requirements of the gas spring, for example, so as to achieve a smaller thrust on the rod 3 during the final part of its extension stroke relative to the cylinder 2.

## Claims

1. A telescopic gas spring (1) usable particularly for raising the rear hatches (P) of motor vehicles (A), including a cylinder (2) defining a chamber (6) containing a pressurised gas and a piston (10) with leakage passages (14) for the gas, slidable in the chamber (6) of the cylinder (2) and carrying a rod (3) that projects from the cylinder (2) through a guide bush (8) adjacent to an annular sealing washer (9) which hermetically defines the chamber (6) and is in sealing sliding contact with the surface of the rod (3), characterised in that the rod (3) has a portion (3a) of reduced section for entering the chamber (6) in substantially the final part of its retraction stroke relative to the cylinder (2), and in that the sealing washer (9) has a sealing lip (15, 16) which is resiliently contractible in a radial direction to stay in sealing contact even against the reduced-section portion (3a) of the rod (3).

2. A gas spring according to Claim 1, characterised in that the reduced-section portion (3a) of the rod (3) is connected to the portion of the rod (3) facing the piston (10) by means of a connecting portion with a conical surface (3b).

3. A gas spring according to Claim 1 or Claim 2, characterised in that said sealing lip (15) has an annular form and is clamped radially against the rod (3) by its own elasticity.

4. A gas spring according to Claim 1 or Claim 2, characterised in that said sealing lip (16) has an annular form and is held against the rod (3) by the action of an annular radial clamping spring (17).

## Patentansprüche

1. Teleskopgasfeder (1), insbesondere zum Öffnen der Heckklappen (P) von Motorfahrzeugen (A) verwendbar, die einen Zylinder (2) umfaßt, der eine Kammer (6) definiert, die ein unter Druck befindliches Gas und einen Kolben (10) mit Ablaufpassagen (14) für das Gas beinhaltet, der sich gleitend in der Kammer (6) des Zylinders (2) befindet, und der einen Schaft (3) trägt, welcher aus dem Zylinder (2) durch eine Führungsbuchse (8) herausragt, die an eine kreisförmige Dichtungsscheibe (9) angrenzt, welche die Kammer (6) hermetisch abdichtet, und die in abdichtendem Gleitkontakt mit der Oberfläche des Schafts (3) ist, **dadurch gekennzeichnet,** daß der Schaft (3) einen Abschnitt (3a) mit reduziertem Querschnitt hat, der im wesentlichen im letzten Teil seines Einzugshubs, relativ zum Zylinder (2), in die Kammer (6) eintritt, und bei dem die Dichtungsscheibe (9) eine Dichtungslippe (15, 16) hat, die elastisch in radialer Richtung kontrahierbar ist, um so in Abdichtkontakt auch mit dem querschnittsreduziertem Abschnitt (3a) des Schafts (3) zu bleiben.

2. Gasfeder nach Anspruch 1, dadurch gekennzeichnet, daß der querschnittsreduzierte Abschnitt (3a) des Schafts (3) mittels eines Verbindungsabschnitts von konischer Oberfläche (3b) mit dem Abschnitt des Schafts (3) verbunden ist, der dem Kolben (10) gegenüberliegt.

3. Gasfeder nach Anspruch 1 oder Anspruch 2, dadurch gekennzeichnet, daß die Dichtungslippe (15) kreisförmig ist und radial durch ihre eigene Elastizität gegen den Schaft (3) geklemmt wird.

4. Gasfeder nach Anspruch 1 oder Anspruch 2, dadurch gekennzeichnet, daß die Dichtungslippe (16) kreisförmig ist und unter Wirkung einer kreisförmigen radialen Klemmfeder (17) gegen den Schaft (3) gehalten wird.

**Revendications**

1. Ressort à gaz télescopique (1), utilisable en particulier pour relever le hayon arrière (P) de véhicules automobiles (A), comprenant un cylindre (2) définissant une chambre (6) qui contient un gaz sous pression et un piston (10) muni de passages de fuite (14) pour le gaz, coulissant dans la chambre (6) du cylindre (2) et portant une tige (3) qui sort du cylindre (2) à travers une douille de guidage (8) adjacente à une rondelle annulaire d'étanchéité (9) qui définit hermétiquement la chambre (6) et est en contact glissant d'étanchéité avec la surface de la tige (3), caractérisé en ce que la tige (3) comporte un segment (3a) de section réduite par lequel elle pénètre dans la chambre (6) dans la partie pratiquement finale de sa course de rétraction par rapport au cylindre (2), et en ce que la rondelle d'étanchéité (9) comporte une lèvre d'étanchéité (15, 16) qui est susceptible de contraction élastique en direction radiale, de façon à maintenir le contact d'étanchéité, même avec le segment de section réduite (3a) de la tige (3).

2. Ressort, à gaz selon la revendication 1, caractérisé en ce que le segment de section réduite (3a) de la tige (3) est relié au segment de la tige (3) appliqué contre le piston (10) au moyen d'un segment de jonction à surface conique (3b).

3. Ressort à gaz selon la revendication 1 ou 2, caractérisé en ce que ladite lèvre d'étanchéité (15) a une forme annulaire et est serrée radialement contre la tige (3) par sa propre élasticité.

4. Ressort à gaz selon la revendication 1 ou 2, caractérisé en ce que ladite lèvre d'étanchéité (16) a une forme annulaire et est maintenue contre la tige (3) sous l'action d'un ressort annulaire de serrage radial (17).

FIG. 1

FIG. 2

FIG. 3